# EUROPÄISCHE PATENTSCHRIFT

(11) **EP 0 681 308 B1**
(45) Veröffentlichungstag und Bekanntmachung des Hinweises auf die Patenterteilung: **07.03.2001**
(21) Anmeldenummer: 95104905.5
(22) Anmeldetag: 01.04.1995
(51) Int. Cl.: H01H 9/54, H02P 7/638

(54) **Schaltungsanordnung zur Begrenzung des zu schaltenden Stromes eines elektrischen Verbrauchers**
Circuit arrangement for limiting the switching current of an electrical load
Circuit pour la limitation du courant de commutation d'un consommateur électrique

(30) Priorität: 05.05.1994 DE 4415794
(43) Veröffentlichungstag der Anmeldung: 08.11.1995
(73) Patentinhaber: Braun GmbH, Kronberg (DE)
(72) Erfinder: Rebordosa, Antonio, E-08240 Manresa (Barcelona) (ES)

(56) Entgegenhaltungen:
- DE-A- 2 046 232
- DE-A- 3 603 545
- DE-A- 4 310 635
- FR-A- 2 445 061
- US-A- 3 678 360

## Beschreibung

Die Erfindung betrifft eine Schaltungsanordnung zur Begrenzung des zu schaltenden Stromes eines elektrischen Verbrauchers nach dem Oberbegriff des Anspruchs 1.

Aus der DE 36 01 862 C2 ist bereits eine gattungsgemäße Schaltungsanordnung bekannt, bei der ein an ein Wechselstromnetz angeschlossener Elektromotor mittels eines Triacs geregelt wird. Die Regelung erfolgt dabei derart, daß an den Steueranschluß des Triacs ein Diac mit einem Widerstandsnetzwerk angeschlossen wird, wobei dieses Widerstandsnetzwerk von dem Benutzer in seinem Wert veränderlich einstellbar ist. Durch eine Änderung des Widerstandswertes wird dabei die Leistungsaufnahme des Elektromotors geregelt, und zwar derart, daß bei kleinerem Widerstand der Elektromotor eine größere Leistung aufnimmt als bei einem größeren Widerstand. Um beim Einschalten des elektrischen Verbrauchers den Einschaltstrom zu begrenzen, ist es vorgesehen, daß der Elektromotor beim Einschalten nur eine geringe Leistungsaufnahme aufweist. Dazu wird in der Anlaufphase des Elektromotors vorgesehen, daß der volle Widerstandswert in die Reihenschaltung mit dem Diac eingeschaltet wird. Erst wenn der Elektromotor angelaufen ist und eine gewisse Mindestfunktion erfüllt, wird dieser volle Widerstandswert derart überbrückt, daß der vom Benutzer eingestellte Widerstandswert an den Diac angeschlossen wird. Dadurch wird erreicht, daß der Elektromotor nur mit einer geringen Leistungsaufnahme, d.h. mit einem geringen Einschaltstrom anlaufen kann. Daß der Elektromotor die Mindestfunktion erfüllt, wird bei der gattungsgemäßen Druckschrift daraus abgeleitet, daß es sich bei dem Elektromotor um den Motor eines Staubsaugers handelt und daß ein Drucksensor vorgesehen ist, der die Druckdifferenz von der Druck- zur Saugseite des Elektromotors meßtechnisch erfaßt und in Abhängigkeit von dem Sensorsignal die Überbrückung des vollen Widerstandes durch den vom Benutzer eingestellten Widerstandswert ermöglicht.

Es ist Aufgabe der vorliegenden Erfindung, zu schaltende Ströme eines elektrischen Verbrauchers durch einen möglichst geringen Bauteilaufwand sicher zu begrenzen.

In dem Stromkreis des Widerstandsnetzwerkes und des Diac fließt bei der Schaltungsanordnung ein Strom von einigen Milliampere, während der Strom durch den elektrischen Verbraucher und den Triac in der Größenordnung von einigen Ampere liegt. Bei der Schaltungsanordnung nach Anspruch 1 wird insbesondere durch die kennzeichnenden Merkmale erreicht, daß durch den mechanischen Schalter, d.h. das Schließen des mechanischen Schalters, lediglich der Strom in dem Kreis des Widerstandsnetzwerkes und des Diacs geschaltet werden muß, d.h. es wird durch den mechanischen Schalter lediglich ein Strom der Größenordnung von einigen Milliampere geschaltet. Das eigentliche Schalten des Stromes durch den elektrischen Verbraucher (Größenordnung einige Ampere) erfolgt dabei, indem der Triac durch die Ansteuerung seines Steueranschlusses geöffnet wird. In diesem Moment ist der mechanische Schalter des Kreises des elektrischen Verbrauchers und des Triacs bereits geschlossen. D.h., daß der eigentliche Schaltvorgang des Stromes durch den elektrischen Verbraucher in dem Triac stattfindet. Dadurch wird in vorteilhafter Weise vermieden, daß durch den mechanischen Schalter ein Einschaltstrom der Größenordnung von einigen Ampere geschaltet werden muß.

Bei dem Ausführungsbeispiel nach Anspruch 2 zeigt sich dabei, daß die Begrenzung des zu schaltenden Stromes auch beim Ausschalten des elektrischen Verbrauchers realisierbar ist. Entsprechend den Verhältnissen bei dem Gegenstand des Anspruchs 1 wird dabei wiederum nur ein Strom von einigen Milliampere geschaltet, indem zuerst der Schalter geöffnet wird, der in dem Stromkreis des Widerstandsnetzwerkes und des Diacs liegt und der Schaltvorgang des Stromes durch den elektrischen Verbraucher und den Triac wiederum im Triac vorgenommen wird durch den Übergang von der leitenden in die Sperrphase des Triacs. Beim öffnen des mechanischen Schalters in dem Kreis des elektrischen Verbrauchers und des Triacs fließt dort bereits kein Strom mehr, d.h. beim öffnen dieses mechanischen Schalters ist dieser Kreis bereits im stromlosen Zustand. Über den mechanischen Schalter wird daher wiederum nur ein Strom von einigen Milliampere geschaltet, nämlich der Strom durch das Widerstandsnetzwerk und den Diac.

In einer besonders vorteilhaften Ausgestaltung der Schaltungsanordnung gemäß Anspruch 3 ist vorgesehen, daß die Begrenzung des zu schaltenden Stromes sowohl beim Einschalten als auch beim Ausschalten des elektrischen Verbrauchers realisiert wird.

Bei der Schaltungsanordnung gemäß Anspruch 4 ergibt sich in vorteilhafter Weise, daß von dem Benutzer durch einen einzigen Bedienvorgang der zeitliche Ablauf der beiden Schaltvorgänge automatisch realisiert wird. Dabei wird das Bedienelement von der Stellung ausgehend, in der dessen Kontaktfahnen mit den nicht leitenden Abschnitten der Leiterbahnen kontaktiert sind, übergeführt in die Stellung des Bedienelementes, in der dessen Kontaktfahnen jeweils mit den leitenden Abschnitten der einzelnen Leiterbahnen kontaktiert sind.

Bei allen diesen Ausbildungen der Schaltungsanordnung zeigt sich, daß gegenüber dem Stand der Technik in vorteilhafter Weise auf einen Sensor zum Erfassen des Anlaufes des elektrischen Verbrauchers verzichtet werden konnte.

Ein Ausführungsbeispiel der Erfindung ist in der Zeichnung dargestellt und wird im folgenden erläutert. Es zeigen:
- Fig. 1: eine erste Schaltungsanordnung nach der Erfindung,
- Fig. 2 und 3: den Zeitablauf des Öffnens und Schließens der jeweiligen Schalter und
- Fig. 4: ein Ausführungsbeispiel, in dem die beiden Schalter in einer Schaltvorrichtung zusammengefaßt sind, so daß durch einen einzigen Bedienvorgang die erfindungsgemäße Funktion, d.h. der Zeitablauf der Öffnungs-und Schließvorgänge der beiden Schalter realisierbar ist.

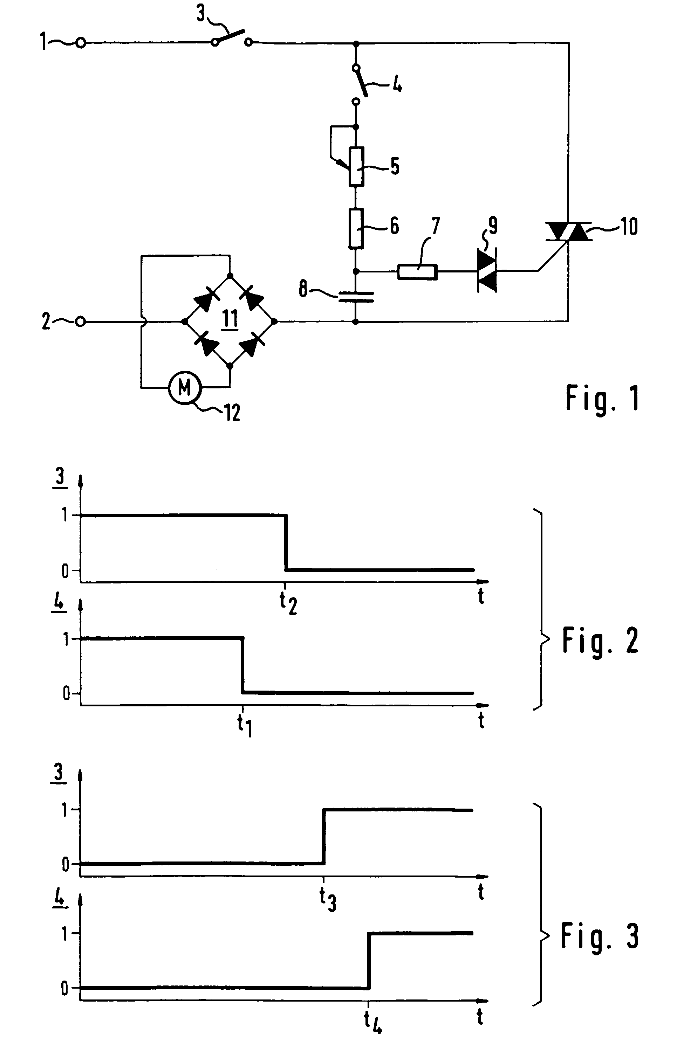

Gemäß der Darstellung der Fig. 1 ist an eine Netzanschlußklemme 1 ein erster Schalter 3 angeschlossen. An diesen ersten Schalter 3 schließt sich eine Parallelschaltung an, deren einer Zweig aus einem Triac 10 besteht und in deren anderem Zweig ein zweiter Schalter 4 sowie eine Widerstandsanordnung 5, 6 angeschlossen ist, deren Widerstandswert veränderbar ist. An diese Widerstände 5, 6 schließt sich, wie dargestellt, ein Kondensator 8 an. An dem Verbindungspunkt des Widerstandes 6 und des Kondensators 8 schließt sich ein Widerstand 7 an, an den sich wiederum ein Diac 9 anschließt, der mit seinem anderen Anschluß mit dem Steuereingang des Triacs 10 verbunden ist. Diese an sich bekannte Schaltungsanordnung dient dazu, die Leistungsaufnahme eines elektrischen Verbrauchers zu regeln, indem der Widerstandswert verändert wird und damit der Steuereingang des Triacs entsprechend beeinflußt wird. Diese beschriebene Parallelschaltung ist mit einem Anschluß einer Gleichrichteranordnung 11 verbunden, deren anderer Anschluß mit der zweiten Netzanschlußklemme 2 verbunden ist. Die Ausgänge der Gleichrichteranordnung 11 sind dabei mit einem Elektromotor 12 verbunden.

Fig. 2 zeigt die Verhältnisse beim Ausschalten des elektrischen Verbrauchers. Gemäß dem unteren Diagramm der Fig. 2 wird dabei der zweite Schalter 4 zum Zeitpunkt t₁ geschlossen, d.h. es fließt jetzt kein Strom mehr durch den Diac 9 und auch kein Strom auf den Steuereingang des Triacs 10. Zum Zeitpunkt t₂, der gegenüber dem Zeitpunkt t₁ nach hinten verschoben ist, wird dann auch der erste Schalter 3 geöffnet. Da der Triac 10 zu diesem Zeitpunkt bereits sperrt, erfolgt das öffnen des ersten Schalters 3 im stromiosen Zustand.

Fig. 3 zeigt die Verhältnisse beim Einschalten des elektrischen Verbrauchers. Dabei wird zunächst zum Zeitpunkt t₃ der erste Schalter 3 geschlossen und mit einer Zeitverzögerung zum Zeitpunkt t₄ der zweite Schalter 4. Da der Triac 10 zum Zeitpunkt t₃ noch sperrt, erfolgt der gesamte Schließvorgang des ersten Schalters 3 im stromiosen Zustand.

Dadurch ist gewährleistet, daß durch den mechanischen Schalter jeweils nur ein Strom der Größenordnung von einigen Milliampere geschaltet werden muß, was dem Steuerstrom des Triacs 10 entspricht. Der Strom durch den elektrischen Verbraucher in der Größenordnung von einigen Ampere wird dadurch geschaltet, daß der Triac vom nicht leitenden in den leitenden bzw. vom leitenden in den nicht leitenden Zustand übergeht. Der erste Schalter 3 wird nur dann geöffnet bzw. geschlossen, wenn dieser Stromkreis stromlos ist.

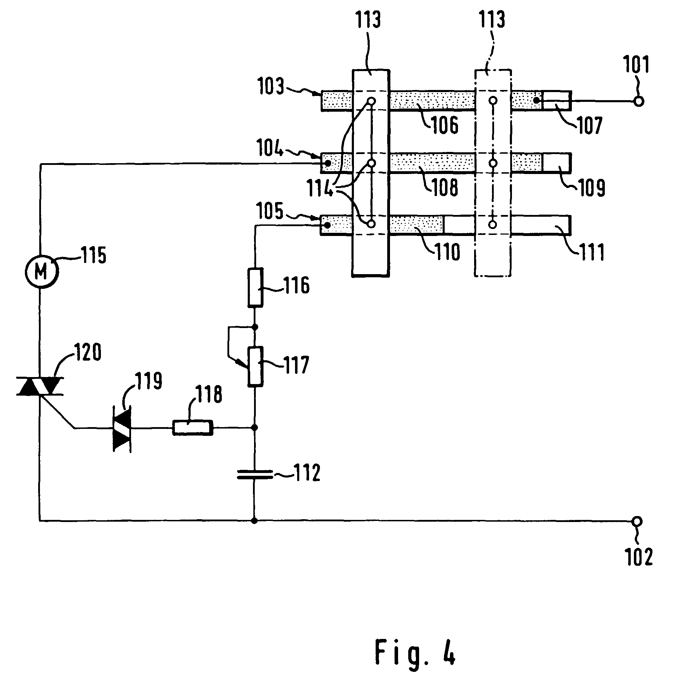

Aus dieser Beschreibung ergibt sich, daß der erste Schalter 3 nicht unbedingt vor der Parallelschaltung gemäß Fig. 1 angeordnet sein muß. Es ist vielmehr auch möglich, diesen ersten Schalter 3 in der Parallelschaltung in den Zweig des Triacs 10 einzubringen. Fig. 4 zeigt ein Ausführungsbeispiel der erfindungsgemäßen Schaltungsanordnung, bei dem der erste Schalter und der zweite Schalter in besonders einfacher Weise ausgebildet sind. Der erste Schalter wird dabei aus den Leiterbahnen 103 und 104 gebildet. Der zweite Schalter besteht aus den Leiterbahnen 103 und 105. Diese Leiterbahnen weisen jeweils elektrisch leitende Abschnitte und nicht leitende Abschnitte auf. Bei der ersten Leiterbahn 103 ergibt sich somit ein leitender Abschnitt 106 und ein nicht leitender Abschnitt 107. Bei der zweiten Leiterbahn 104 ergibt sich ein leitender Abschnitt 108 und ein nicht leitender Abschnitt 109. Bei der dritten Leiterbahn 105 ergibt sich ein leitender Abschnitt 110 und ein nicht leitender Abschnitt 111. Wie in Fig. 4 dargestellt, sind diese Leiterbahnen im wesentlichen parallel angeordnet. Bei der ersten und der zweiten Leiterbahn 103, 104 sind die nicht leitenden Abschnitte 107, 109 in etwa gleich lang und nebeneinander angeordnet. Bei der dritten Leiterbahn 105 ist der nicht leitende Abschnitt 111 deutlich länger gegenüber der ersten und der zweiten Leiterbahn 103, 104 bezüglich deren nicht leitender Abschnitte 107, 109. Der elektrisch leitende Abschnitt 106 der ersten Leiterbahn 103 ist dabei mit einer Netzanschlußklemme 101 elektrisch leitend verbunden. Der leitende Abschnitt der zweiten Leiterbahn 104 ist dabei mit dem elektrischen Verbraucher, im hier vorliegenden Beispiel ein Elektromotor 115, sowie einem Triac 120 verbunden. Der elektrisch leitende Abschnitt 110 der dritten Leiterbahn 105 ist mit einer Widerstandsanordnung 116, 117, wobei der Widerstandswert 117 in seinem Wert veränderlich ausgebildet ist, sowie einem Kondensator 112 verbunden. Der andere Anschluß des Kondensators 112 sowie der Triac 120 sind dabei mit der zweiten Netzanschlußklemme 102 verbunden. Vom Verbindungspunkt des einstellbaren Widerstandes 117 und des Kondensators 112 ausgehend schließt sich ein Widerstand 118 und an diesen wiederum ein Diac 119 an, dessen Ausgang mit dem Steuereingang des Triacs 120 verbunden ist. Diese Anordnung dient dazu, in an sich bekannter Weise eine Phasenanschnittsteuerung des Triacs 120 zu realisieren, um damit die Leistungsaufnahme des Elektromotors 115 zu regeln.

Weiterhin ist ein Bedienelement 113 vorgesehen, das sich quer über die Leiterbahnen 103, 104 und 105 erstreckt. Von diesem Bedienelement 113 ausgehend sind Leiterfahnen 114 federelastisch angebracht, die mit den Leiterbahnen kontaktiert sind. In dem Bedienelement 113 sind diese Leiterfahnen 114 elektrisch miteinander verbunden. Dieses Bedienelement 113 ist entlang der Leiterbahnen verschiebbar, so daß durch diese Verschiebung der Elektromotor 115 ein- bzw. ausgeschaltet wird. Die ausgeschaltete Stellung ist dann erreicht, wenn sich das Bedienelement 113 in der Darstellung der Fig. 4 ganz rechts befindet, d.h. daß die Leiterfahnen 114 jeweils mit den nicht leitenden Abschnitten 107, 109 und 111 der Leiterbahnen 103, 104 und 105 verbunden sind. Der eingeschaltete Zustand des elektrischen Verbrauchers 115 ist dann erreicht, wenn sich das Bedienelement 113 in der Darstellung der Fig. 4 auf der linken Seite befindet, d.h. daß dann die Leiterfahnen 114 jeweils mit den leitenden Abschnitten 106, 108 und 110 der Leiterbahnen 103, 104 und 105 kontaktiert sind. Beim Übergang von dem ausgeschalteten in den eingeschalteten Zustand wird dabei zunächst eine elektrische Verbindung zwischen den leitenden Abschnitten 106 und 108 der Leiterbahnen 103 und 104 hergestellt. Wie in der Zeichnung dargestellt, befinden sich während dieses Schließvorganges die Leiterfahnen 114 über der Leiterbahn 105 noch auf dem nicht leitenden Abschnitt 111 der Leiterbahn 105, so daß kein elektrischer Kontakt zwischen der ersten Leiterbahn 103 und der Leiterbahn 105 besteht. Das bedeutet, daß der erste Schalter, bestehend aus der Leiterbahn 103 und 104, bereits geschlossen ist, wenn der zweite Schalter, bestehend aus der Leiterbahn 103 und 105, noch nicht geschlossen ist. Im weiteren Verlauf des Schließvorganges, d.h. wenn sich das Bedienelement weiter nach links bewegt, wird dann auch der zweite Schalter geschlossen. Insgesamt wird dadurch beim Einschaltvorgang erreicht, daß der erste Schalter zeitlich vor dem zweiten Schalter geschlossen wird. Dies bewirkt, daß beim Schließen des ersten Schalters noch kein Stromfluß durch den elektrischen Verbraucher möglich ist, da entsprechend der Belegung des Steueranschlusses des Triacs dieser sich noch nicht im leitenden Zustand befindet. Der Einschaltvorgang ist also bezüglich des ersten Schalters stromlos. Während des weiteren Schließvorganges wird der zweite Schalter, bestehend aus den Leiterbahnen 103 und 105, geschlossen. Entsprechend der Dimensionierung der Widerstände und des benötigten Steuerstromes am Triac wird dabei nur ein Strom der Größenordnung von einigen Milliampere geschaltet. Der Einschaltvorgang des Stromes durch den elektrischen Verbraucher wird in diesem Falle dadurch realisiert, daß der Triac 120 von seinem nicht leitenden in einen leitenden Zustand übergeht, d.h. daß der eigentliche Schaltvorgang des Verbraucherstromes der Größenordnung von einigen Ampere im Triac stattfindet. Beim Ausschaltvorgang sind die Verhältnisse genau umgekehrt. Das Bedienelement 113 wird dabei von seiner linken Stellung gemäß der Fig. 4 in seine rechte Stellung übergeführt. Dabei wird zunächst der elektrische Kontakt zwischen der Leiterbahn 103 und 105 unterbrochen, da die Leiterfahne 114 auf der Leiterbahn 105 zuerst in deren nicht leitenden Abschnitt 111 gerät. Dabei wird der Steuerstrom des Triacs der Größenordnung von einigen Milliampere ausgeschaltet. Dies führt dazu, daß der Triac vollständig sperrt, so daß auch durch den elektrischen Verbraucher 115 kein Strom mehr fließt. Im weiteren Verlauf der Bewegung des Bedienelementes 113 wird dann die Leiterfahne 114 auch auf der ersten und der zweiten Leiterbahn 103 und 104 die jeweiligen nicht leitenden Abschnitte 107 und 109 erreichen. Bei diesem öffnen des ersten Schalters fließt jedoch bereits kein Strom mehr durch den elektrischen Verbraucher 115, so daß das öffnen dieses ersten Schalters wiederum stromlos erfolgt. Beim Ausschalten ergibt sich also, daß der zweite Schalter zeitlich vor dem ersten Schalter geöffnet wird. Die Ausbildung der Leiterbahnen ist dabei derart, daß der nicht leitende Abschnitt der dritten Leiterbahn 105 einige Millimeter länger ist als die nicht leitenden Abschnitte 107 und 109 der ersten und zweiten Leiterbahnen 103 und 104. Dies führt entsprechend der Bewegungsgeschwindigkeit des Bedienelementes 113 zu einer Zeitdifferenz beim öffnen bzw. Schließen des ersten und zweiten Schalters in der Größenordnung von einigen Millisekunden.

Es ist dabei ersichtlich, daß ein öffnen des ersten Schalters bzw. des zweiten Schalters dann passiert, wenn wenigstens eine der jeweiligen Leiterfahnen 114 sich auf einem nicht leitenden Abschnitt der Leiterbahn befindet. Es ist daher im Rahmen dieses Ausführungsbeispiels auch möglich, beispielsweise die Leiterbahn 103 lediglich aus dem leitenden Abschnitt 106 auszubilden, der sich dann über die gesamte Leiterbahn 103 erstreckt. Das Vorsehen von nicht leitenden Abschnitten 107, 109, 111 ergibt jedoch Vorteile bei der Sicherheit. Das Bedienelement 113 hat dann im ausgeschalteten Zustand keinen Spannungsanschluß über die Leiterfahnen 114.

## Patentansprüche

1. Schaltungsanordnung zur Begrenzung des zu schaltenden Stromes eines elektrischen Verbrauchers (12; 115), bei der die Leistungsaufnahme des elektrischen Verbrauchers mittels eines Triacs (10; 120) gesteuert wird, der Triac in Reihe zu dem elektrischen Verbraucher geschaltet ist, an den Steueranschluß des Triac ein Diac (9; 119) angeschlossen ist, der Diac mit einer Widerstandsanordnung (5, 6, 7; 116, 117, 118) in Reihe geschaltet ist, die zur Steuerung des Triacs in ihrem Wert veränderbar ausgebildet ist, der Triac mittels eines ersten Schalters (3; 103, 104) vom Netzanschluß trennbar ist,
**dadurch gekennzeichnet,**
daß ein zweiter Schalter (4; 103, 105) vorhanden ist, durch den die Reihenschaltung der Widerstandsanordnung mit dem Diac vom Netzanschluß trennbar ist, und ein Bedienelement (113) zum Betätigen des ersten und zweiten Schalters vorgesehen ist, durch das beim Einschalten des elektrischen Verbrauchers zuerst der erste Schalter geschlossen wird und mit einer zeitlichen Verzögerung (t₃, t₄) der zweite Schalter.

2. Schaltungsanordnung zur Begrenzung des zu schaltenden Stromes eines elektrischen Verbrauchers (12; 115), bei der die Leistungsaufnahme des elektrischen Verbrauchers mittels eines Triacs (10; 120) gesteuert wird, der Triac in Reihe zu dem elektrischen Verbraucher geschaltet ist, an den Steueranschluß des Triac ein Diac (9; 119) angeschlossen ist, der Diac mit einer Widerstandsanordnung (5, 6, 7; 116, 117, 118) in Reihe geschaltet ist, die zur Steuerung des Triacs in ihrem Wert veränderbar ausgebildet ist, der Triac mittels eines ersten Schalters (3; 103, 104) vom Netzanschluß trennbar ist
**dadurch gekennzeichnet,**
daß ein zweiter Schalter (4; 103, 105) vorhanden ist, durch den die Reihenschaltung der Widerstandsanordnung mit dem Diac vom Netzanschluß trennbar ist, und ein Bedienelement (113) zum Betätigen des ersten und zweiten Schalters vorgesehen ist, durch das beim Ausschalten des elektrischen Verbrauchers zuerst der zweite Schalter geöffnet wird und mit einer zeitlichen Verzögerung (t₁, t₂) der erste Schalter.

3. Schaltungsanordnung nach Anspruch 2,
**dadurch gekennzeichnet,**
daß durch das Bedienelement (113) beim Einschalten des elektrischen Verbrauchers (12; 115) zuerst der erste Schalter (3; 103, 104) geschlossen wird und mit einer zeitlichen Verzögerung (t₃, t₄) der zweite Schalter (4; 103, 105).

4. Schaltungsanordnung nach Anspruch 3,
**dadurch gekennzeichnet,**
daß drei Leiterbahnen (103, 104, 105) im wesentlichen parallel angeordnet sind, wobei jede dieser Leiterbahnen (103, 104, 105) aus jeweils einem leitenden Abschnitt (106, 108, 110) und einem nicht leitenden Abschnitt (107, 109, 111) besteht, wobei der leitende Abschnitt (106) der ersten Leiterbahn (103) mit einer Klemme (101) des Netzanschlusses verbunden ist, wobei der leitende Abschnitt (108) der zweiten Leiterbahn (104) mit der Reihenschaltung des Triacs (10; 120) und des elektrischen Verbrauchers (11, 12; 115) verbunden ist und wobei die nicht leitenden Abschnitte (107, 109) der ersten und der zweiten Leiterbahn (103, 104) nebeneinander liegen und in etwa gleich lang sind, wobei der leitende Abschnitt (110) der dritten Leiterbahn (105) mit der Reihenschaltung der Widerstandsanordnung (5, 6, 7; 116, 117, 118) und dem Diac (9; 119) verbunden ist und wobei der nicht leitende Abschnitt (111) der dritten Leiterbahn (105) eine größere Länge aufweist als die nicht leitenden Abschnitte (109, 107) der ersten und zweiten Leiterbahn (103, 104), so daß sich neben einem Teil der leitenden Abschnitte (106, 108) der ersten und zweiten Leiterbahn (103, 104) ein Teil des nicht leitenden Abschnittes (111) der dritten Leiterbahn (105) befindet und daß sich das Bedienelement (113) im wesentlichen quer über die Leiterbahnen (103, 104, 105) erstreckt und entlang der Leiterbahnen (103, 104, 105) verschiebbar angeordnet ist, wobei von dem Bedienelement (113) ausgehend jeweils eine Leiterfahne (114) federelastisch mit jeweils einer Leiterbahn (103, 104, 105) kontaktiert ist und wobei die Leiterfahnen (114) über das Bedienelement (113) miteinander elektrisch leitend verbunden sind.

## Claims

1. A circuit arrangement for limiting the current supplied to an electrical load (12; 115), in which the power input of the electrical load is controlled by means of a Triac (10; 120), said Triac is connected in series with the electrical load, a Diac (9; 119) is connected to the gate terminal of the Triac, said Diac is connected in series with a resistor network (5, 6, 7; 116, 117, 118) whose resistance value is variable for the purpose of controlling the Triac, said Triac is disconnectible from the power supply by means of a first switch (3; 103, 104),
**characterized in that** provision is made for a second switch (4; 103, 105) by means of which the series arrangement comprised of the resistor network and the Diac is disconnectible from the power supply, and that provision is made for an operator-controlled device (113) for actuating the first and the second switch, by means of which first the first switch is closed and then, with a time delay (t₃, t₄), the second switch when the electrical load is turned on.

2. A circuit arrangement for limiting the current supplied to an electrical load (12; 115), in which the power input of the electrical load is controlled by means of a Triac (10; 120), said Triac is connected in series with the electrical load, a Diac (9; 119) is connected to the gate terminal of the Triac, said Diac is connected in series with a resistor network (5, 6, 7; 116, 117, 118) whose resistance value is variable for the purpose of controlling the Triac, said Triac is disconnectible from the power supply by means of a first switch (3; 103, 104),
**characterized in that** provision is made for a second switch (4; 103, 105) by means of which the series arrangement comprised of the resistor network and the Diac is disconnectible from the power supply, and that provision is made for an operator-controlled device (113) for actuating the first and the second switch, by means of which first the second switch is opened and then, with a time delay (t₁, t₂), the first switch when the electrical load is turned off.

3. The circuit arrangement as claimed in claim 2,
**characterized in that,** on turning the electrical load (12; 115) on, the operator-controlled device (113) causes first the first switch (3; 103, 104) to be closed and then the second switch (4; 103, 105) with a time delay (t₃, t₄).

4. The circuit arrangement as claimed in claim 3,
**characterized in that** three conductors (103, 104, 105) are arranged essentially parallel to each other, each of said conductors (103, 104, 105) comprising a respective conducting portion (106, 108, 110) and a respective non-conducting portion (107, 109, 111), wherein the conducting portion (106) of the first conductor (103) is connected to a terminal (101) of the power supply, the conducting portion (108) of the second conductor (104) is connected to the series arrangement comprised of the Triac (10; 120) and the electrical load (11, 12; 115), wherein the non-conducting portions (107, 109) of the first and the second conductor (103, 104) are positioned alongside each other and are of approximately equal length, with the conducting portion (110) of the third conductor (105) being connected to the series arrangement comprised of the resistor network (5, 6, 7; 116, 117, 118) and the Diac (9; 119), the non-conducting portion (111) of the third conductor (105) being of a length greater than the non-conducting portions (109, 107) of the first and the second conductor (103, 104), so that a section of the non-conducting portion (111) of the third conductor (105) is positioned alongside a section of the conducting portions (106, 108) of the first and the second conductor (103, 104), and an operator-controlled device (113) is provided which extends essentially transversely to and over the conductors (103, 104, 105) and is slidable along said conductors (103, 104, 105), said operator-controlled device (113) including respective lugs (114), each extending from said operator-controlled device (113) and each resiliently engaging a respective conductor (103, 104, 105), with the lugs (114) making electrical contact with each other through the operator-controlled device (113).

## Revendications

1. Montage pour limiter le courant à commuter d'un appareil d'utilisation électrique (12; 115), dans lequel l'absorption de puissance de l'appareil d'utilisation électrique est commandée au moyen d'un triac (10; 120), le triac est branché en série avec l'appareil d'utilisation électrique, un diac (9; 119) est raccordé à la borne de commande du triac, le diac est branché en série avec un dispositif à résistances (5, 6, 7; 116, 117, 118), qui est agencé de manière à avoir une valeur variable pour la commande du triac, le triac peut être séparé du raccordement au réseau au moyen d'un premier interrupteur (3; 103, 104), caractérisé en ce qu'il est prévu un second interrupteur (4; 103, 105), au moyen duquel le circuit série formé par le dispositif à résistances et le diac peut être séparé du raccordement au réseau, et il est prévu un élément de commande (113) pour actionner les premier et second interrupteurs, à l'aide duquel tout d'abord le premier interrupteur est fermé lors du branchement de l'appareil d'utilisation électrique et le second interrupteur est fermé avec un retard (t₃, t₄).

2. Montage pour limiter le courant à commuter d'un appareil d'utilisation électrique (12; 115), dans lequel l'absorption de puissance de l'appareil d'utilisation électrique est commandée au moyen d'un triac (10; 120), le triac est branché en série avec l'appareil d'utilisation électrique, un diac (9; 119) est raccordé à la borne de commande du triac, le diac est branché en série avec un dispositif à résistances (5, 6, 7; 116, 117, 118), qui est agencé de manière à avoir une valeur variable pour la commande du triac, le triac peut être séparé du raccordement au réseau au moyen d'un premier interrupteur (3; 103, 104), caractérisé en ce qu'il est prévu un second interrupteur (4; 103, 105), au moyen duquel le circuit série formé par le dispositif à résistances et le diac peut être séparé du raccordement au réseau, et il est prévu un élément de commande (113) pour actionner les premier et second interrupteurs, à l'aide duquel, lors du débranchement de l'appareil d'utilisation électrique, tout d'abord le second interrupteur est ouvert et le premier interrupteur est ouvert avec un retard (t₁, t₂).

3. Montage selon la revendication 2, caractérisé en ce que lors du branchement de l'appareil d'utilisation électrique (12; 115), tout d'abord le premier interrupteur (3; 103, 104) est fermé et le second interrupteur (4; 103, 105) est fermé avec un retard (t₃, t₄), par l'élément de commande (113).

4. Montage selon la revendication 3, caractérisé en ce que trois voies conductrices (103, 104, 105) sont disposées essentiellement en parallèle, et dans lequel chacune de ces voies conductrices (103, 104, 105) est constituée respectivement par un tronçon conducteur (106, 108, 110) et un tronçon non conducteur (107, 109, 111), et dans lequel le tronçon conducteur (106) de la première voie conductrice (103) est relié à une borne (101) du raccordement au réseau, le tronçon conducteur (108) de la seconde voie conductrice (104) est relié au circuit série formé par le triac (10; 120) et l'appareil d'utilisation électrique (11, 12; 115) et les tronçons non conducteurs (107, 109) des première et seconde voies conductrices (103, 104) sont disposés côte-à-côte et ont des longueurs approximativement identiques, le tronçon conducteur (110) de la troisième voie conductrice (105) est relié au circuit série du dispositif à résistances (5, 6, 7; 116, 117, 118) et du diac (9; 119) et le tronçon non conducteur (109) de la troisième voie conductrice (105) possède une longueur supérieure à celle des tronçons non conducteurs (109, 107) des première et seconde voies conductrices (103, 104) de sorte qu'une partie du tronçon non conducteur (111) de la troisième voie conductrice (105) est disposée à côté d'une partie des tronçons conducteurs (106, 108) des première et seconde voies conductrices (103, 104) et que l'élément de commande (113) s'étend essentiellement transversalement au-dessus des voies conductrices (103, 104, 105) et est disposé de manière à être déplaçable le long des voies conductrices (103, 104, 105), une patte conductrice respective (114), qui s'étend à partir de l'élément de commande (113), étant en contact élastiquement avec une voie conductrice respective (103, 104, 105) et les pattes conductrices (114) sont reliées entre elles d'une manière électriquement conductrice par l'intermédiaire de l'élément de commande (113).
